# EUROPÄISCHE PATENTANMELDUNG

(11) **EP 4 364 969 A1**
(43) Veröffentlichungstag der Anmeldung: **08.05.2024**
(21) Anmeldenummer: 23207276.9
(22) Anmeldetag: 01.11.2023
(51) Int. Cl.: B60C 11/00, B60C 11/03

(54) **FAHRZEUGLUFTREIFEN**

(30) Priorität: 02.11.2022 DE 102022211588
(71) Anmelder: Continental Reifen Deutschland GmbH, 30175 Hannover (DE)
(72) Erfinder: Römer, Justus, 30165 Hannover (DE); Dr. Karow, Malte, 30165 Hannover (DE); Tomforde, Willem, 30165 Hannover (DE)
(74) Vertreter: Continental Corporation

(57) **Zusammenfassung**

Die Erfindung betrifft einen Fahrzeugluftreifen mit einem Laufstreifen mit einem radial äußeren Laufstreifenbereich (6) und radial inneren Laufstreifenteilen (7a, 7b), wobei im radial äußeren Laufstreifenbereich (6) eine oder mehrere zur Profilierung gehörende, Profilbänder (9, 10) voneinander trennende Umfangsrille(n) (8) ausgebildet ist bzw. sind.

Die radial inneren Laufstreifenteile (7a, 7b) bilden eine einzige in Umfangsrichtung umlaufende radial innere Laufstreifenschicht (7), welche, im Querschnitt des Reifens betrachtet, abwechselnd aus den ersten radial inneren Laufstreifenteilen (7a) und dem bzw. den zweiten radial inneren Laufstreifenteil(en) (7b) zusammengesetzt ist, wobei jedem Profilband (9, 10) jeweils ein erster radial innerer Laufstreifenteil (7a) und jeder Umfangsrille (8) jeweils ein zweiter radial innerer Laufstreifenteil (7b) zugeordnet ist und wobei die Shore A-Härte gemäß DIN EN ISO 868 des Gummimateriales des bzw. jedes zweiten radial inneren Laufstreifenteils (7b) größer ist als die Shore A-Härte gemäß DIN EN ISO 868 des Gummimateriales jedes ersten radial inneren Laufstreifenteils (7a).

## Beschreibung

Die Erfindung betrifft einen Fahrzeugluftreifen mit einem Laufstreifen mit einem die Profilierung enthaltenden, sich insbesondere über die Breite des Laufstreifens erstreckenden, radial äußeren Laufstreifenbereich und in Umfangrichtung umlaufenden, aus Gummimaterial bestehenden, radial inneren Laufstreifenteilen, wobei im radial äußeren Laufstreifenbereich eine oder mehrere zur Profilierung gehörende, Profilbänder voneinander trennende, in Umfangsrichtung umlaufende Umfangsrille(n) ausgebildet ist bzw. sind, wobei zu den radial inneren Laufstreifenteilen radial innerhalb je eines Profilbandes befindliche, erste radial innere Laufstreifenteile und ein radial innerhalb der Umfangsrille befindlicher, zweiter radial innerer Laufstreifenteil bzw. mehrere radial innerhalb je ein Umfangsrille befindliche, zweite radial innere Laufstreifenteile gehören.

Ein derartiger Fahrzeugluftreifen ist beispielsweise aus der DE 10 2014 208 551 A1 bekannt. Der Fahrzeugluftreifen weist einen Gürtelverband mit mehreren Gürtellagen, eine Gürtelbandage und einen Laufstreifen mit einer Laufstreifencap (radial äußerer Laufstreifenbereich) und einer Laufstreifenbase auf. In der Laufstreifencap sind Umfangsrillen ausgebildet, welche Profilbänder voneinander trennen. Die Laufstreifenbase ist aus einer Klebharz enthaltenden Kautschukmischung gefertigt und weist zumindest drei in Umfangsrichtung umlaufende Baseteile (radial innere Laufstreifenteile) auf. Bei einem der Ausführungsbeispiele sind im Bereich radial innerhalb je einer Umfangsrille verlaufende Baseteile und radial innerhalb je eines Profilbandes ausgebildete Baseteile vorgesehen.

Bei Fahrzeugluftreifen der eingangs genannte Art wirken sich die Umfangsrillen beim Abrollen des Reifens am Untergrund auf die am und im Laufstreifen auftretende Druckverteilung aus, wobei im Bereich der Profilbänder ein größerer Druck als im Bereich der Umfangsrillen auftritt. Folglich ist die Druckverteilung am Laufstreifen über den Reifenquerschnitt ungleichmäßig, wodurch der Rollwiderstand erhöht und das Abrollgeräusch verstärkt ist.

Der Erfindung liegt daher die Aufgabe zugrunde, bei einem Fahrzeugluftreifen der eingangs genannten Art die Druckverteilung am Laufstreifen beim Abrollen des Reifens zu vergleichmäßigen.

Gelöst wird die gestellte Aufgabe erfindungsgemäß dadurch, dass die radial inneren Laufstreifenteile eine einzige in Umfangsrichtung umlaufende radial innere Laufstreifenschicht bilden, welche, im Querschnitt des Reifens betrachtet, abwechselnd aus den ersten radial inneren Laufstreifenteilen und dem bzw. den zweiten radial inneren Laufstreifenteil(en) zusammengesetzt ist, wobei jedem Profilband jeweils ein erster radial innerer Laufstreifenteil und jeder Umfangsrille jeweils ein zweiter radial innerer Laufstreifenteil zugeordnet ist und wobei die Shore A-Härte gemäß DIN EN ISO 868 des Gummimateriales des bzw. jedes zweiten radial inneren Laufstreifenteils größer ist als die Shore A-Härte gemäß DIN EN ISO 868 des Gummimateriales jedes ersten radial inneren Laufstreifenteils.

Die erfindungsgemäß ausgeführten radial inneren Laufstreifenteile sind daher Bestandteile einer durchgehenden Laufstreifenschicht, wobei abwechselnd härtere und weichere Laufstreifenteile vorgesehen sind. Der bzw. die härtere(n) Laufstreifenteil(e) versteifen den Laufstreifen im Bereich der Umfangsrille(n), wodurch beim Abrollen des Reifens - gegenüber bekannten Reifen - insgesamt eine über den Reifenquerschnitt gleichmäßigere Druckverteilung auftritt.

Gemäß einer bevorzugten Ausführung ist die Shore A-Härte des Gummimateriales des bzw. jedes zweiten radial inneren Laufstreifenteils um 3,0 ShA bis 15,0 ShA, insbesondere um 5,0 ShA bis 10,0 ShA, bevorzugt um 6,0 ShA bis 8,0 ShA, größer ist als die Shore A-Härte des Gummimateriales jedes ersten radial inneren Laufstreifenteils. Eine derartige Differenz in den Shore A-Härten der Gummimaterialen trägt zu einer zusätzlichen Vergleichmäßigung der erwähnten Druckverteilung bei.

Gemäß einer weiteren bevorzugten Ausführung beträgt die Shore A-Härte des Gummimateriales jedes ersten radial inneren Laufstreifenteils 52,0 ShA bis 59,0 ShA. beträgt. Dies sorgt für eine vor allem in Hinblick auf den Rollwiderstand besonders günstige Versteifung im Bereich der Umfangsrille(n).

Eine weitere bevorzugte Ausführung ist dadurch gekennzeichnet, dass der bzw. jeder zweite radial innere Laufstreifenteil, im Querschnitt betrachtet, eine Breite von 80% bis 160%, bevorzugt von 90% bis 150%, besonders bevorzugt von 100% bis 130%, der in axialer Richtung ermittelten maximalen Breite der bzw. der jeweils radial außerhalb von ihm verlaufenden Umfangsrille aufweist. Dadurch wird der Laufstreifen auf besonders vorteilhafte Weise im Bereich der Umfangsrille(n) versteift, wodurch die Druckverteilung weiter vergleichmäßigt wird.

Ferner ist es günstig, wenn der bzw. jeder zweite radial innere Laufstreifenteil, im Reifenquerschnitt betrachtet, durch eine radial nach innen fortgeführte Mittelfläche der radial außerhalb von ihm verlaufenden Umfangsrille in zwei Laufstreifenteilabschnitte gegliedert ist, wobei jeder Laufstreifenteilabschnitt eine in axialer Richtung ermittelte Breite von 40% bis 60%, insbesondere von 45% bis 55%, bevorzugt von 48% bis 52%, der bzw. einer in axialer Richtung ermittelten Breite des zweiten radial inneren Laufstreifenteils aufweist.

Eine weitere bevorzugte Ausführung sieht vor, dass die Umfangsrille(n), in Draufsicht betrachtet, gerade verläuft bzw. verlaufen. Dadurch lassen sich die Auswirkungen der Umfangsrille(n) auf die Druckerteilung besonders günstig mit dem bzw. den zweiten radial inneren Laufstreifenteil(en) ausgleichen.

Eine weitere bevorzugte Ausführung ist dadurch gekennzeichnet, dass jeder erste radial innere Laufstreifenteil und der bzw. jeder zweite radial innere Laufstreifenteil jeweils aus einer Kautschukmischung gefertigt ist, wobei die Kautschukmischung des bzw. jedes zweiten radial inneren Laufstreifenteils eine größere Menge Ruß enthält als die Kautschukmischung jedes ersten radial inneren Laufstreifenteils.

Bevorzugter Weise sind im radial äußeren Laufstreifenbereich zwei bis sechs Umfangsrillen ausgebildet.

Gemäß einer weiteren vorteilhaften Ausführung erstreckt sich die radial innere Laufstreifenschicht, im Querschnitt betrachtet, über die in axialer Richtung ermittelte maximale Breite des radial äußeren Laufstreifenbereichs.

Bevorzugter Weise bestehen die ersten radial inneren Laufstreifenteile aus demselben Gummimaterial.

Eine weitere vorteilhafte Ausführung ist dadurch gekennzeichnet, dass die radial innere Laufstreifenschicht des Laufstreifens mehrere zweite radial innere Laufstreifenteile aufweist, wobei die zweiten radial inneren Laufstreifenteile aus demselben Gummimaterial bestehen.

Gemäß einer weiteren vorteilhaften Ausführung ist vorgesehen, dass der Laufstreifen aus einer vom radial äußeren Laufstreifenbereich gebildeten Laufstreifencap und einer von der radial inneren Laufstreifenschicht gebildeten Laufstreifenbase zusammengesetzt ist.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 einen Querschnitt durch einen Fahrzeugluftreifen im Bereich des Laufstreifens und des Gürtelverbands und
Fig. 2 eine vergrößerte Ansicht auf das Detail Z₂ der Fig. 1.

Gemäß der Erfindung ausgeführte Fahrzeugluftreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Reifen in Radialbauart für Felgen mit einem ganzzahligen Felgendurchmesser von 13 bis 24 Zoll, insbesondere von 18 bis 23 Zoll.

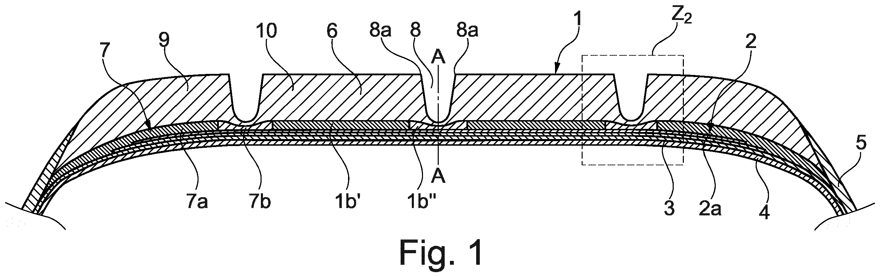

In Fig. 1 sind von den wesentlichen Bauteilen eines Fahrzeugluftreifens ein profilierter Laufstreifen 1, ein Gürtelverband 2 mit zwei Gürtellagen 2a, Abschnitte einer Karkasseinlage 3 und einer Innenschicht 4 sowie die radial äußeren Endabschnitte von Seitenwänden 5 dargestellt. Ferner kann der Fahrzeugluftreifen eine den Gürtelverband 2 radial außen bedeckende Gürtelbandage aufweisen. Die Reifenäquatorialebene ist durch eine Linie A-A angedeutet.

Der Gürtelverband 2, die Karkasseinlage 3, die Innenschicht 4 und die Seitenwände 5 können in an sich bekannter Weise ausgeführt sein.

Der Laufstreifen 1 ist in radialer Richtung zweischichtig aufgebaut und setzt sich aus einer die Profilierung enthaltenden Laufstreifencap 6 und einer radial innerhalb der Laufstreifencap 6 verlaufenden Laufstreifenbase 7 zusammen, wobei sich die Laufstreifenbase 7, im Querschnitt betrachtet, über die in axialer Richtung ermittelte maximale Breite (Breite an der breitesten Stelle) der Laufstreifencap 6 erstreckt. Sowohl die Laufstreifencap 6 als auch die Laufstreifenbase 7 verlaufen über den gesamten Umfang des Reifens.

Zur Profilierung des Laufstreifens 1 gehören drei, in Umfangsrichtung umlaufende, beim Ausführungsbeispiel in Draufsicht gerade verlaufende Umfangsrillen 8, welche der Laufstreifencap 6 und damit dem Laufstreifen 1 zwei schulterseitige Profilbänder 9 und zwei mittlere Profilbänder 10 verleihen. Die Profilbänder 9, 10 können in insbesondere in bekannter Weise mit Rillen und/oder Einschnitten strukturiert sein.

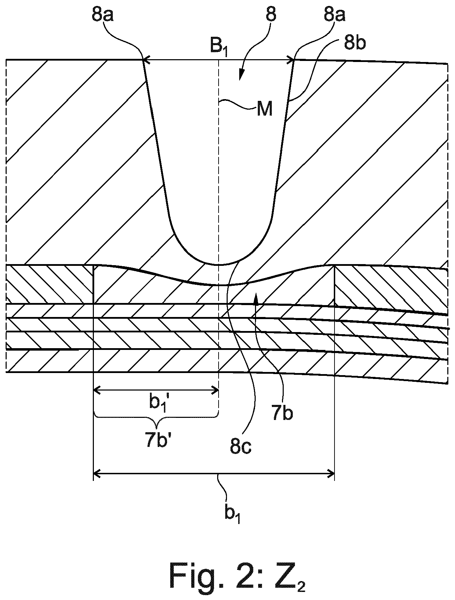

Die Umfangsrillen 8 sind in radialer Richtung auf die jeweils vorgesehene Profiltiefe ausgeführt, welche für den bevorzugt vorgesehenen Reifentyp (PKW, Van, SUV) insbesondere 6,0 mm bis 13,0 mm beträgt, weisen an der Laufstreifenperipherie jeweils zwei Rillenkanten 8a sowie eine in axialer Richtung zwischen den Rillenkanten 8a ermittelte, beim Ausführungsbeispiel konstante Breite B₁ (Fig. 2) von 5,0 mm bis 15,0 mm sowie jeweils eine in radialer Richtung verlaufende, zu den Rillenkanten 8a übereinstimmende beabstandete Mittelfläche M (Fig. 2) auf. Gemäß Fig. 2 ist jede Umfangsrille 8 durch zwei von den Rillenkanten 8a ausgehenden, im Querschnitt gerade verlaufenden Rillenflanken 8b und einem zumindest abschnittsweise gerundeten Rillengrund 8c begrenzt.

Wie Fig. 1 ferner zeigt, ist die Laufstreifenbase 7 als eine einzige in Umfangsrichtung umlaufende Schicht ausgeführt, wobei sich die Laufstreifenbase 7, im Querschnitt des Fahrzeugluftreifens betrachtet, aus mehreren, jeweils einem Profilband 9, 10 zugeordneten Baseteilen 7a und mehreren, jeweils einer Umfangsrille 8 zugeordneten Baseteilen 7b zusammensetzt. Dabei ist im Bereich radial innerhalb von jedem Profilband 9, 10 jeweils ein Baseteile 7a und im Bereich radial innerhalb jeder Umfangsrille 8 jeweils ein Baseteile 7b ausgebildet, sodass ein Baseteil 7a abwechselnd auf einen Baseteile 7b folgt. Die Baseteile 7a, 7b sind jeweils gerade (also nicht gewellt) in Umfangsrichtung umlaufende Bauteile.

Die weitere Ausgestaltung der Baseteile 7b wird nachfolgend anhand eines einzelnen Baseteils 7b erläutert.

Gemäß Fig. 2 weist der Baseteil 7b, im Querschnitt des Fahrzeugluftreifens betrachtet, über seine gesamte Umfangserstreckung eine in axialer Richtung ermittelte Breite b₁ von 70% bis 200%, insbesondere von 80% bis 160%, bevorzugt von 90% bis 150%, und besonders bevorzugt von 100% bis 130%, der Breite B₁ der jeweils radial außerhalb von ihm verlaufenden Umfangsrille 8 auf und passiert die radial nach innen fortgeführte Mittelfläche M der Umfangsrille 8. Die Breite b₁ des Baseteils 7b ist über dessen Umfangserstreckung konstant oder variiert fertigungsbedingt im angegebenen Bereich. Eine etwaig variierende Breite b₁ ist dabei insbesondere eine Folge der beim Ausformen der Profilierung des Laufstreifens wirkenden Kräften sowie der bei der Vulkanisation auftretenden Fließvorgänge. Die Lage des Baseteils 7b relativ zur radial außerhalb von ihm verlaufenden Umfangsrille 8 ist derart, dass, im erwähnten Querschnitt betrachtet, die radial nach innen fortgeführte Mittelfläche M der Umfangsrille 8 den Baseteil 7b in zwei Baseteilabschnitte 7b' mit jeweils einer in axialer Richtung ermittelten Breite b₁' von 40% bis 60%, insbesondere von 45% bis 55%, bevorzugt von 48% bis 52%, der jeweils lokal vorliegenden Breite b₁ des Baseteils 7b gliedert.

Die Baseteile 7a bestehen jeweils aus einem Gummimaterial (Elastomer, Vulkanisat) mit einer Shore A-Härte gemäß DIN EN ISO 868 (ISO 868:2003) von 52,0 ShA (Shore A) bis 59,0 ShA. Die Baseteile 7a bestehen vorzugsweise aus demselben Gummimaterial.

Die Baseteile 7b bestehen jeweils aus einem Gummimaterial (Elastomer, Vulkanisat) mit einer Shore A-Härte gemäß DIN EN ISO 868 (ISO 868:2003), welche größer ist als die Shore A-Härte jedes bzw. des Gummimateriales der Baseteile 7a. Die Shore A-Härte jedes bzw. des Gummimateriales der Baseteile 7b ist um 3,0 ShA bis 15,0 ShA, bevorzugt 5,0 ShA bis 10,0 ShA, und besonders bevorzugt 6,0 ShA bis 8,0 ShA größer ist als die Shore A-Härte jedes bzw. des Gummimateriales der Baseteile 7a. Die Baseteile 7b bestehen vorzugsweise aus demselben Gummimaterial.

Die Baseteile 7a, 7b sind jeweils aus einer insbesondere in an sich bekannter Weise ausgeführten Kautschukmischung gefertigt. Auf die Shore A-Härte des Gummimateriales kann in bekannter Weise Einfluss genommen werden, beispielsweise durch die Menge an Vernetzungschemikalien, die Menge an Weichmacher oder die Menge und Wahl der Füllstoffe. Bevorzugter Weise enthält die Kautschukmischung der Baseteile 7a, 7b als Füllstoff zumindest einen Ruß und zumindest eine Kieselsäure. Die Kautschukmischung der Baseteile 7b enthält vorzugsweise eine größere Menge Ruß als die Kautschukmischung der Baseteile 7a.

Die Erfindung ist auf das beschriebene Ausführungsbeispiel nicht beschränkt.

Der Laufstreifen muss keine Cap/Base-Aufbau, wie beim Ausführungsbeispiel beschrieben, aufweisen.

Der Laufstreifen weist einen sich über die in axialer Richtung ermittelte Breite des Laufstreifens erstreckenden, die Profilierung enthaltenden, radial äußeren Laufstreifenbereich auf. Der radial äußere Laufstreifenbereich kann zumindest abschnittsweise in axialer Richtung und/oder in radialer Richtung mehrteilig ausgeführt sein. Beim Ausführungsbeispiel ist der radial äußere Laufstreifenbereich von der Laufstreifencap 6 gebildet.

Ferner weist der Laufstreifen eine in Umfangsrichtung umlaufende, radial innere Laufstreifenschicht auf, welche sich, im Querschnitt des Reifens betrachtet, abwechselnd aus ersten radial inneren Laufstreifenteilen und zweiten radial inneren Laufstreifenteilen zusammensetzt, wobei pro Profilband jeweils ein radial innerhalb des jeweiligen Profilbandes befindlicher, erster radial inneren Laufstreifenteil und pro Umfangsrille jeweils ein radial innerhalb der jeweiligen Umfangsrille befindlicher, zweiten radial inneren Laufstreifenteil vorgesehen ist. Beim Ausführungsbeispiel sind die ersten radial inneren Laufstreifenteile die Baseteile 7a und die zweiten radial inneren Laufstreifenteile die Baseteile 7b.

Der Laufstreifen weist zumindest eine Umfangsrille, insbesondere zwei bis sechs Umfangsrillen, auf, wobei die Umfangsrille(n) in Draufsicht bevorzugt gerade verläuft bzw. verlaufen. Sämtliche oder einzelne der Umfangsrillen können, in Draufsicht betrachtet, wellenförmig, beispielsweise in Form einer geschwungenen Welle oder einer Zickzack-Welle, verlaufen. Ferner können die Umfangsrillen eine über ihren Verlauf variierende Breite aufweisen.

Die Breite der jeweils im Bereich einer Umfangsrille befindlichen, zweiten radial inneren Laufstreifenteile beträgt 70% bis 200%, insbesondere 80% bis 160%, bevorzugt 90% bis 150%, und besonders bevorzugt 100% bis 130% der an der Laufstreifenperipherie in axialer Richtung ermittelten, maximalen Breite (Breite an der breitesten Stelle) der radial außerhalb des jeweiligen zweiten radial inneren Laufstreifenteils verlaufenden Umfangsrille. Beim beschriebenen Ausführungsbeispiel entspricht die maximale Breite jeder Umfangsrille der erwähnten konstanten Breite B₁. Im Bereich der Rillenkanten der Umfangsrillen können zumindest abschnittsweise Fasen (Schrägflächen), Abrundungen oder Ausnehmungen an bzw. in den Profilbändern ausgebildet sein, sodass die Rillenflanken nicht bis zur Laufstreifenperipherie reichen. Reichen die Rillenflanken nicht bis zu Laufstreifenperipherie, bleiben die Fasen (Schrägflächen), die Abrundungen bzw. die Ausnehmungen bei der Ermittlung der maximalen Breite unberücksichtigt, sodass die Ermittlung der maximalen Breite derart erfolgt, als wären die an die Fasen, die Abrundungen oder Ausnehmungen anschließenden Rillenflanken, im Querschnitt betrachtet, gerade zur Laufstreifenperipherie fortgeführt. Die Rillenflanken verlaufen, im Querschnitt betrachtet, zu radialen Richtung vorzugsweise unter einem Winkel von 0° bis 10°.

### Bezugszeichenliste

- 1: Laufstreifen
- 2: Gürtelverband
- 2a: Gürtellage
- 3: Karkasseinlage
- 4: Innenschicht
- 5: Seitenwand
- 6: Laufstreifencap
- 7: Laufstreifenbase
- 7a: Baseteil
- 7b: Baseteil
- 7b': Baseteilabschnitt
- 8: Umfangsrille
- 8a: Rillenkante
- 8b: Rillenflanke
- 8c: Rillengrund
- 9: schulterseitiges Profilband
- 10: mittleres Profilband
- A-A: Linie (Reifenäquatorialebene)
- B₁, b₁, b₁': Breite
- M: Mittelfläche
- Z₂: Detail

## Patentansprüche

1. Fahrzeugluftreifen mit einem Laufstreifen mit einem die Profilierung enthaltenden, sich insbesondere über die Breite des Laufstreifens (1) erstreckenden, radial äußeren Laufstreifenbereich (6) und in Umfangrichtung umlaufenden, aus Gummimaterial bestehenden, radial inneren Laufstreifenteilen (7a, 7b), wobei im radial äußeren Laufstreifenbereich (6) eine oder mehrere zur Profilierung gehörende, Profilbänder (9, 10) voneinander trennende, in Umfangsrichtung umlaufende Umfangsrille(n) (8) ausgebildet ist bzw. sind, wobei zu den radial inneren Laufstreifenteilen (7a, 7b) radial innerhalb je eines Profilbandes (9, 10) befindliche, erste radial innere Laufstreifenteile (7a) und ein radial innerhalb der Umfangsrille (8) befindlicher, zweiter radial innerer Laufstreifenteil (7b) bzw. mehrere radial innerhalb je ein Umfangsrille (8) befindliche, zweite radial innere Laufstreifenteile (7b) gehören,
**dadurch gekennzeichnet,**
**dass** die radial inneren Laufstreifenteile (7a, 7b) eine einzige in Umfangsrichtung umlaufende radial innere Laufstreifenschicht (7) bilden, welche, im Querschnitt des Reifens betrachtet, abwechselnd aus den ersten radial inneren Laufstreifenteilen (7a) und dem bzw. den zweiten radial inneren Laufstreifenteil(en) (7b) zusammengesetzt ist, wobei jedem Profilband (9, 10) jeweils ein erster radial innerer Laufstreifenteil (7a) und jeder Umfangsrille (8) jeweils ein zweiter radial innerer Laufstreifenteil (7b) zugeordnet ist und wobei die Shore A-Härte gemäß DIN EN ISO 868 des Gummimateriales des bzw. jedes zweiten radial inneren Laufstreifenteils (7b) größer ist als die Shore A-Härte gemäß DIN EN ISO 868 des Gummimateriales jedes ersten radial inneren Laufstreifenteils (7a).

2. Fahrzeugluftreifen nach Anspruch 1, **dadurch gekennzeichnet, dass** die Shore A-Härte des Gummimateriales des bzw. jedes zweiten radial inneren Laufstreifenteils (7b) um 3,0 ShA bis 15,0 ShA, insbesondere um 5,0 ShA bis 10,0 ShA, bevorzugt um 6,0 ShA bis 8,0 ShA, größer ist als die Shore A-Härte des Gummimateriales jedes ersten radial inneren Laufstreifenteils (7a).

3. Fahrzeugluftreifen nach Anspruch 1 oder 2, **dadurch gekennzeichnet, dass** die Shore A-Härte des Gummimateriales jedes ersten radial inneren Laufstreifenteils (7a) 52,0 ShA bis 59,0 ShA beträgt.

4. Fahrzeugluftreifen nach einem der Ansprüche 1 bis 3, **dadurch gekennzeichnet, dass** der bzw. jeder zweite radial innere Laufstreifenteil (7b), im Querschnitt betrachtet, eine Breite (b₁) von 80% bis 160%, bevorzugt von 90% bis 150%, besonders bevorzugt von 100% bis 130%, der in axialer Richtung ermittelten maximalen Breite (B₁) der bzw. der jeweils radial außerhalb von ihm verlaufenden Umfangsrille (8) aufweist.

5. Fahrzeugluftreifen nach Anspruch 4 oder einem der Ansprüche 1 bis 3, **dadurch gekennzeichnet, dass** der bzw. jeder zweite radial innere Laufstreifenteil (7b), im Reifenquerschnitt betrachtet, durch eine radial nach innen fortgeführte Mittelfläche (M) der radial außerhalb von ihm verlaufenden Umfangsrille (8) in zwei Laufstreifenteilabschnitte (7b') gegliedert ist, wobei jeder Laufstreifenteilabschnitt (7b') eine in axialer Richtung ermittelte Breite (b₁') von 40% bis 60%, insbesondere von 45% bis 55%, bevorzugt von 48% bis 52%, der bzw. einer in axialer Richtung ermittelten Breite (b₁) des zweiten radial inneren Laufstreifenteils (7b) aufweist.

6. Fahrzeugluftreifen nach einem der Ansprüche 1 bis 5, **dadurch gekennzeichnet, dass** die Umfangsrille(n) (8), in Draufsicht betrachtet, gerade verläuft bzw. verlaufen.

7. Fahrzeugluftreifen nach einem der Ansprüche 1 bis 6, **dadurch gekennzeichnet, dass** jeder erste radial innere Laufstreifenteil (7a) und der bzw. jeder zweite radial innere Laufstreifenteil (7b) jeweils aus einer Kautschukmischung gefertigt ist, wobei die Kautschukmischung des bzw. jedes zweiten radial inneren Laufstreifenteils (7b) eine größere Menge Ruß enthält als die Kautschukmischung jedes ersten radial inneren Laufstreifenteils (7a).

8. Fahrzeugluftreifen nach einem der Ansprüche 1 bis 7, **dadurch gekennzeichnet, dass** im radial äußeren Laufstreifenbereich (6) zwei bis sechs Umfangsrillen (8) ausgebildet sind.

9. Fahrzeugluftreifen nach einem der Ansprüche 1 bis 8, **dadurch gekennzeichnet, dass** sich die radial innere Laufstreifenschicht (7), im Querschnitt betrachtet, über die in axialer Richtung ermittelte maximale Breite des radial äußeren Laufstreifenbereichs (6) erstreckt.

10. Fahrzeugluftreifen nach einem der Ansprüche 1 bis 9, **dadurch gekennzeichnet, dass** die ersten radial inneren Laufstreifenteile (7a) aus demselben Gummimaterial bestehen.

11. Fahrzeugluftreifen nach einem der Ansprüche 1 bis 10, **dadurch gekennzeichnet, dass** die radial innere Laufstreifenschicht (7) des Laufstreifens (1) mehrere zweite radial innere Laufstreifenteile (7b) aufweist, wobei die zweiten radial inneren Laufstreifenteile (7b) aus demselben Gummimaterial bestehen.

12. Fahrzeugluftreifen nach einem der Ansprüche 1 bis 11, **dadurch gekennzeichnet, dass** der Laufstreifen (1) aus einer vom radial äußeren Laufstreifenbereich (6) gebildeten Laufstreifencap (6) und einer von der radial inneren Laufstreifenschicht (7) gebildeten Laufstreifenbase (7) zusammengesetzt ist.
